# EUROPEAN PATENT APPLICATION

(11) **EP 1 908 507 A1**
(43) Date of publication of application: **09.04.2008**
(21) Application number: 07116395.0
(22) Date of filing: 14.09.2007
(51) Int. Cl.: B01D 46/52, B01D 29/11, B01D 29/21, B01D 46/00, B01D 46/24

(54) **Method and apparatus for assembling a filter cartridge**

(30) Priority: 25.09.2006 US 534733
(71) Applicant: BHA Group, Inc, Kansas City, MO 64133 (US)
(72) Inventor: Smithies, Alan, Overland Park, KS 66213 (US); Mei, Jason, Overland Park, KS 66211 (US)
(74) Representative: Illingworth-Law, William Illingworth

(57) **Abstract**

A method of fabricating a filter cartridge (20,90) includes providing filtration media (24) formed into a plurality of pleats (26), wherein the filtration media have a substantially tubular configuration with a pre-determined circumferential spacing between each of the plurality of pleats. The filter cartridge is configured to remove particulates from a particulate-laden fluid stream flowing in a direction through the filter cartridge. The filter cartridge is also configured to be periodically subjected to a cleaning fluid stream tlowing in a substantially opposite direction of the particulate-laden fluid stream. The method also includes coupling at least one retention device to the filtration media, wherein the retention device is fabricated from a melt-extrudable polymer material that is configured to facilitate extending a life expectancy of the filter cartridge when operationally exposed to operating temperatures ranging from 135°C (275°F) to 204°C (400°F).

## Description

### BACKGROUND OF THE INVENTION

The present invention relates generally to filter cartridges and more particularly, to methods and apparatus for assembling a filter cartridge with a retention strap. More specifically, the present invention relates to a retention device and a method for assembling a filter cartridge with the retention device.

Some known filter cartridges have pleated filtration media for filtering particulates from a particulate laden fluid stream moving in one direction through the filter cartridge. Some known particulate laden fluid streams include, but are not limited to, hot gas streams associated with coal-fired boilers, cement kilns, and asphalt plants. Such hot gas streams may include extended periods of time wherein associated gas stream temperatures range from approximately 135 degrees Celsius (°C) (275 degrees Fahrenheit (°F)) to 204°C (400°F). Such filter cartridges are often subjected to cleaning fluid pulses moving for short periods of time through the filtration media in a direction opposite to the direction that the particulate laden fluid stream moves. Such filter cartridges are referred to as "pulse pleat" filter cartridges. In order to prevent the filtration media from excessive movement during exposure to the cleaning fluid pulses, some filter cartridges have retention straps that encircle portions of the pulse pleat filter cartridge.

However, some known retention straps for pulse pleat filter cartridges are difficult to install onto a filter cartridge and may not remain in the relative axial location that they are initially placed in. For example, some known textile retention straps must be manually wrapped about the filtration media of the filter cartridge. Such textile retention straps are typically tightened manually and the ends of the retention straps are overlapped. The ends of the retention strap are then adhered or fastened together while a desired tension is manually maintained on the retention strap.

Maintaining the retention straps in a pre-determined relative axial location along the filter cartridge facilitates protecting the filtration media from excessive movement during exposure to the cleaning fluid pulses. This is typically accomplished by the use of known adhesives. However, some of such adhesives used on the retention straps may have shortened life expectancies, depending on the service environment, and the retention straps may axially shift along the filter cartridge away from the pre-determined position.

### BRIEF DESCRIPTION OF THE INVENTION

In one aspect, a method of fabricating a filter cartridge is provided. The method includes providing filtration media formed into a plurality of pleats. The filtration media has a substantially tubular configuration with a pre-determined circumferential spacing between each of the plurality of pleats. The filter cartridge is configured to remove particulates from a particulate-laden fluid stream flowing in a direction through the filter cartridge. The filter cartridge is also configured to be periodically subjected to a cleaning fluid stream flowing in a substantially opposite direction of the particulate-laden fluid stream. The method also includes coupling at least one retention device to the filtration media, wherein the retention device is fabricated from a melt-extrudable polymer material that is configured to facilitate extending a life expectancy of the filter cartridge when operationally exposed to operating temperatures ranging from 135°C (275°F) to 204°C (400°F).

In another aspect, a retention device is provided. The retention device includes a melt-extrudable polymer material configured to facilitate an extended life expectancy of said filter cartridge when operationally exposed to operating temperatures ranging from 135°C (275°F) to 204°C (400°F).

In a further aspect, a filter cartridge is provided. The filter cartridge includes at least one retention device. The retention device includes a melt-extrudable polymer material configured to facilitate an extended life expectancy of said filter cartridge when operationally exposed to operating temperatures ranging from 135°C (275°F) to 204°C (400°F).

### BRIEF DESCRIPTION OF THE DRAWINGS

Embodiments of the present invention will now be described, by way of example only, with reference to the accompanying drawings, in which:

Figure 1 is a schematic perspective view of an exemplary filter cartridge;

Figure 2 is a schematic side view of the filter cartridge shown in Figure 1;

Figure 3 is a cross-sectional schematic view of the filter cartridge shown in Figure 2 taken along line 3-3;

Figure 4 is a cross-sectional schematic view of an alternative filter cartridge;

Figure 5 is a schematic side view of an exemplary extrusion equipment configuration that can be used to fabricate the filter cartridges shown in Figures 1, 2, 3, and 4; and

Figure 6 is a schematic overhead view of the extrusion equipment configuration shown in Figure 5.

### DETAILED DESCRIPTION OF THE INVENTION

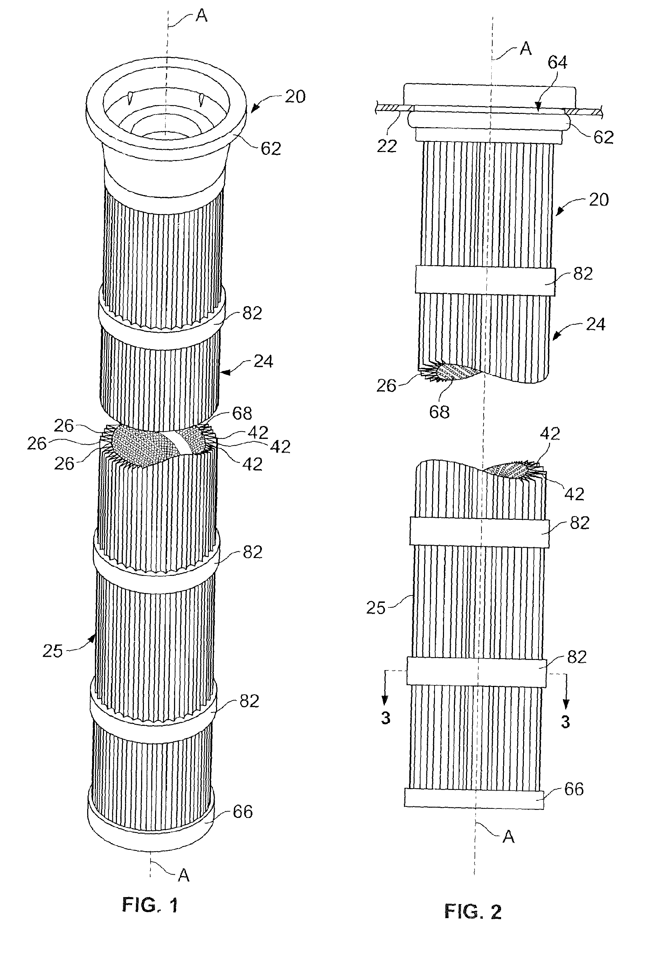

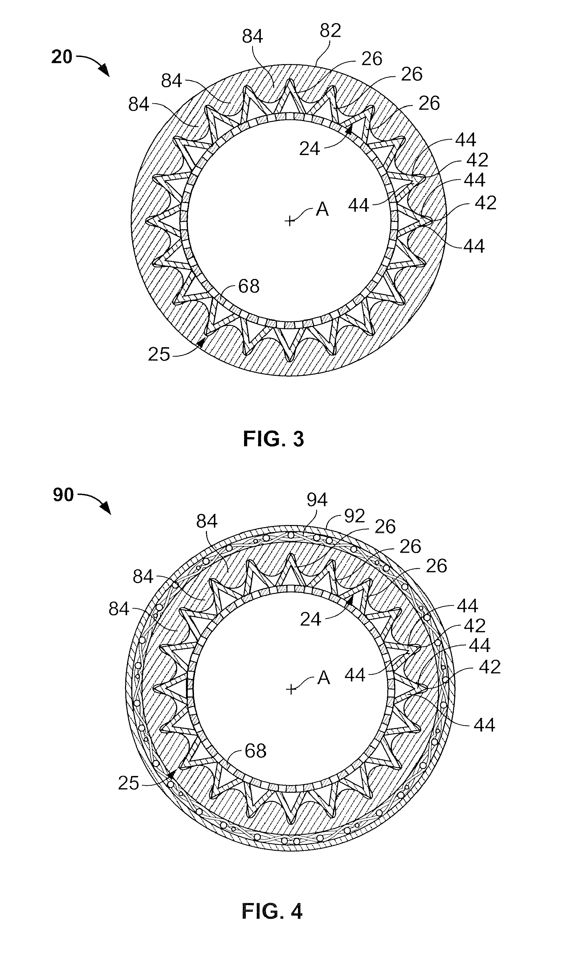

Figure 1 is a schematic perspective view of an exemplary filter cartridge 20. Figure 2 is a schematic side view of filter cartridge 20 (shown in Figure 1). Figure 3 is a cross-sectional schematic view of filter cartridge 20 (shown in Figure 2) taken along line 3-3. Filter cartridge 20 is configured to remove particulates from a particulate laden fluid stream (not shown) that flows in one direction through filter cartridge (20). In the exemplary embodiment, filter cartridge 20 is particularly suitable for use in air pollution control applications that includes, but is not limited to, a bag house substantially removing particulate matter from a flue gas stream associated with a coal-fired furnace. Moreover, in the exemplary embodiment, filter cartridge 20 is operably attached to a tube sheet 22 positioned within a plenum (not shown) of a known baghouse (not shown).

Alternatively, filter cartridge 20 is used in any application that requires particulate removal from a fluid stream. Furthermore, filter cartridge 20 is a "pulse pleat" type of filter cartridge that is periodically subjected to pulsed cleaning fluid flowing in an opposite direction to the direction that the particulate-laden fluid stream flows. For example, in the exemplary embodiment, such pulsed cleaning fluid is compressed, high-pressure, substantially particulate-free air. Alternatively, the pulsed cleaning fluid is any fluid that facilitates operation of filter cartridge 20 as described herein. Filter cartridge 20 may be subjected to over 300,000 cleaning pulses per year over a typical expected service life of approximately three years.

Filter cartridge 20 includes filtration media 24 that is formed into a tubular configuration that is generally cylindrical, with a longitudinal central axis A. Filtration media 24 includes a plurality of pleats 26 which are circumferentially spaced about a periphery 25 of filter cartridge 20. Each of pleats 26 includes a tip 42 formed at its radially outermost location and a pair of sides 44 extending radially inward from each of tips 42. Pleats 26 in filtration media 24 are not necessarily stiff and strong, thus, without a means of restraint, pleats 26 are prone to radially outward movement during a flow of a cleaning fluid pulse through media 24. Excessive radial outward movement of filtration media 24 may reduce a filtration effectiveness of filter cartridge 20. Adjacent pleats 26 may also "collapse" and temporarily engage one another during a cleaning pulse or during a typical filtration cycle. When adjacent pleats 26 engage one another, there is a chance that the cleaning pulse or filtration operation will not be as effective as it should be because gas flow through that portion of filtration media 24 may be temporarily blocked. Thus, it is desirable to restrain filtration media 24 about periphery 25 to facilitate reducing excessive radial movement of filtration media 24 or collapse of pleats 26.

A mounting structure 62 is located at a first axial end portion of filter cartridge 20. Mounting structure 62 facilitates mounting and sealing filter cartridge 20 at an opening 64 that is formed in tube sheet 22. Opening 64 facilitates flow of particulate-laden fluid and pulse fluid streams through filter cartridge 20. An end cap 66 is located at an axially opposite second axial end portion of filter cartridge 20. In the exemplary embodiment, mounting structure 62 and end cap 66 are made of metal materials that include, but are not limited to, a galvanized steel material. Alternatively, structure 62 and end cap 66 are fabricated of any material that facilitates operation of filter cartridge 20 as described herein. Filtration media 24 is positioned and maintained in the generally tubular configuration by mounting structure 62 and end cap 66. A permeable support 68 is located radially inward of filtration media 24 to prevent inward collapse of filtration media 24 during exposure to the particulate-laden fluid stream that is to be filtered.

Filter cartridge 20 also includes a plurality of retention straps 82. Retention straps 82 limit radial movement of filtration media 24 in the radially outward direction, opposite to the flow of the fluid stream to be filtered, when subjected to the periodic cleaning fluid stream and, thus, limit the possibility of pleat blow-out or catastrophic deformation. Retention straps 82 also establish a pre-determined spacing apart and maintaining adjacent pleats 26 at the pre-determined spacing around periphery 25 of filter cartridge 20.

In the exemplary embodiment, each retention strap 82 is fabricated from a melt-extrudable polymer material capable of withstanding relatively high-temperature operation. Such materials have sufficient strength, fatigue resistance, chemical resistance and temperature resistance to limit excessive radial movement of filtration media 24 during a cleaning pulse and maintaining tips 42 of pleats 26 at a pre-determined spacing. For example, such melt-extrudable polymer material facilitates extending a pre-determined service life of retention strap 82 within environments that have elevated operating temperatures up to 204 degrees Celsius (°C) (400 degrees Fahrenheit (°F)). Moreover, retention strap 82 facilitates extending a pre-determined service life within severe operating environments that further include, but are not limited to, routine exposure to moisture and aggressive chemicals. In the exemplary embodiment, retention strap 82 is fabricated from Radel R^{®} 5000 series thermoplastic polyphenylene sulfone resin commercially available from Solvay Advanced Polymers Inc of Alpharetta, Georgia, USA. Alternatively, strap 82 is fabricated from any melt-extrudable polymer material that facilitates operation of filter cartridge 20 as described herein that includes, but is not limited to, polysulfone (PS) or Odal^{®} commercially available from Solvay Advanced Polymers, Houston, Texas, polyphenylene sulfide (PPS) or Forton^{®} commercially available from Ticona Polymers Inc., Florence, KY and polyetherimide (PEI) or Ultem^{®} commercially available from GE Plastics, Pittsfield, Massachusetts.

Also, in the exemplary embodiment, such high-temperature melt-extrudable polymer material has sufficient strength and impact resistance at the previously discussed relatively elevated operating temperatures that retention strap 82 is exposed to. Moreover, such material further includes sufficient resistance to chemical- and moisture-induced degradation of its material strength and impact resistance at the relatively elevated operating temperatures. The preferred thermoplastic polyphenylene sulfone resin is Radel R^{®} 5800 thermoplastic commercially available from Solvay Advanced Polymers Inc of Alpharetta, Georgia, USA. Alternatively, strap 82 is fabricated from any melt-extrudable polymer material that facilitates operation of filter cartridge 20 as described herein.

In the exemplary embodiment, retention strap 82 can withstand over 300,000 cleaning pulses and continue to function while continuously immersed in an environment that has a temperature of approximately 191 °C (375°F) with a service life of approximately three years without losing its strength and without moving axially along filter cartridge 20 from the position it was initially placed in.

Retention strap 82 extends around periphery 25 and engages and is adhered to at least some tips 42 and perhaps some of sides 44 of pleats 26. Such engagement minimizes radially outward movement of tips 42 of pleats 26 and that pleats 26 are maintained at their pre-determined spacing without collapsing against one another during exposure to the pressure and flow of the cleaning fluid stream or the particulate laden air stream. Such adherence facilitates retention strap 82 remaining in the relative axial location it was originally placed in throughout its service life.

In the exemplary embodiment, retention strap 82 is applied to filter cartridge 20 during an extrusion operation. Retention strap 82 is adhered to filtration media 24 during the extrusion operation so it does not move along periphery 25 of filter cartridge 20 in a direction parallel to axis A. Moreover, during the extrusion operation, a plurality of portions 84 of retention strap 82 are formed which extend at least partially into a region between each of adjacent pleats 26. Forming portions 84 facilitates forming some structure between pleats 26 thereby mitigating a tendency for adjacent pleats 26 from engaging each other and collapsing. Also, forming such portions facilitates retention strap 82 engaging and adhering to tips 42 and/or sides 44 of pleats 26 as described above such that retention strap 82 remaining in the pre-determined axial position is enhanced. Subsequent to application to periphery 25, the material of retention strap 82 "cures" and upon curing, it has a hardness and strength sufficient to withstand the operating environment it will be exposed to for its service life. Such configuration of retention strap 82 and mitigation of longitudinal movement along periphery 25 facilitates mitigating mechanical wear and abrasion of filtration media 24. Such abrasion may typically be facilitated by excessive and deleterious longitudinal and radial movement between strap 82 and media 24 during standard flow operations and pulsed operations as described herein.

Figure 4 is a cross-sectional schematic view of an alternative filter cartridge 90. Filter cartridge 90 is similar to filter cartridge 20 with the exception that filter cartridge 90 includes an alternative retention strap 92 according to another embodiment of the invention. Retention strap 92 includes a reinforcement structure 94 that is fabricated with any suitable material including, but not limited to, textiles. Reinforcement structure 94 is introduced during the extrusion operation. For example, in the exemplary embodiment, reinforcement structure 94 is introduced approximately immediately subsequent to formation of a single extrusion pass by pressing structure 94 into the extrudate. Alternatively, structure 94 is introduced between any two separate extrusion passes.

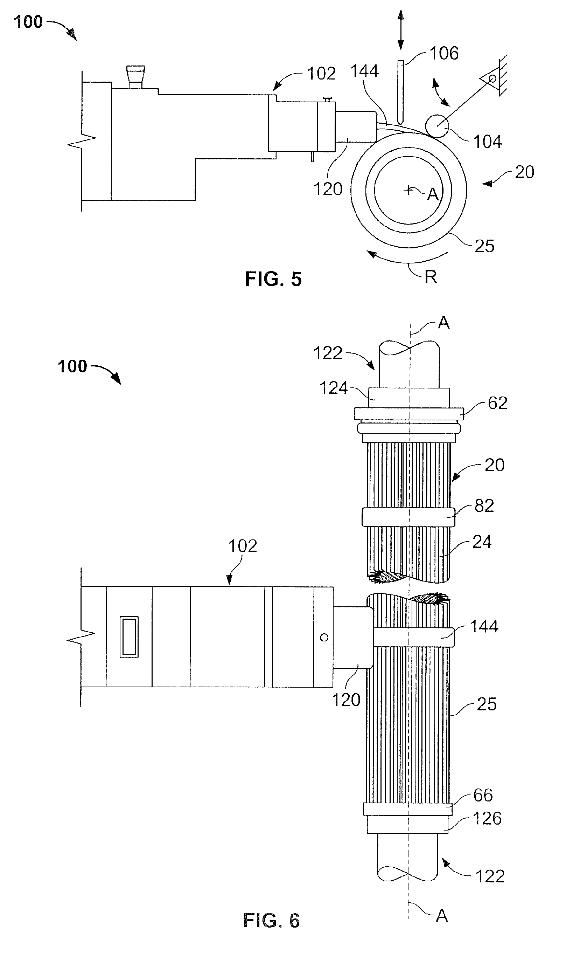

Figure 5 is a schematic side view of an exemplary extrusion equipment configuration 100 that can be used to fabricate filter cartridges 20 and 90 (shown in Figures 1, 2, 3, and 4). Figure 6 is a schematic overhead view of extrusion equipment configuration 100 (shown in Figure 5). Configuration 100 includes an extruder 102, a pivotable application roller 104 positioned in opposition to extruder 102, a cutoff mechanism 106 positioned between extruder 102 and roller 104, an optional reinforcement applicator (not shown), and an application barrel 120 coupled in flow communication with a source of hot, melted high-temperature melt-extrudable polymer material (not shown).

Configuration 100 also includes a support mechanism 122 that is configured to hold and rotate filter cartridge 20 during application of an extruded retention strap 82. Support mechanism 122 includes a mounting structure holder 124 and an end cap holder 126. Mounting structure holder 124 is configured to fit within and supports mounting structure 62 of filter cartridge 20 with a friction fit. End cap holder 126 is configured to support end cap 66 of filter cartridge 20 via a friction fit. Support mechanism 122 is configured to position filter cartridge 20 so longitudinal central axis A of filter cartridge 20 extends in a direction normal to a barrel 120 of extruder 102. Either or both of the holders 124 or 126 are rotatably coupled with a drive mechanism (not shown) to rotate supported filter cartridge 20 under barrel 120 of extruder 102, in a clockwise direction as illustrated by the arrow R illustrated in Figure 5.

A method of fabricating filter cartridge 20 with retention strap 82 includes providing filtration media 24 formed into a plurality of pleats 26 having a substantially tubular configuration with a pre-determined circumferential spacing between each of the plurality of pleats 26. Filter cartridge 20 is configured to remove particulates from a particulate-laden fluid stream flowing in a direction through filter cartridge 20. Filter cartridge 20 is further configured to be periodically subjected to a cleaning fluid stream flowing in a substantially opposite direction of the particulate-laden fluid stream. The method also includes coupling at least one retention strap 82 to filtration media 24. Retention strap 82 includes a high-temperature melt-extrudable polymer material configured to facilitate a life expectancy of filter cartridge 20 for at least two continuous years of service at temperatures ranging from 135°C (275°F) to 204°C (400°F).

The methods of assembling filter cartridge 20, including forming retention strap 82, are substantially semi-automated with minimal operator interface and facilitate improved consistency of product quality while facilitating a decrease in the cost of assembly.

In the assembly methods, filter cartridge 20 (or 90) without any retention straps 82 (or 92) is held in proximity to extruder 102 by a support mechanism 122. The filter cartridge 20 is rotated under barrel 120 of extruder 102 while a band of extrudate 144 is applied to periphery 25 of filter cartridge 20. Application roller 104 is loaded to a pre-determined force so portions 84 of the uncured extrudate 144 is forced to deform in between adjacent pleats 26 of filtration media 24. Application roller 104 also forces extrudate 144 to contact tips 42 and sides 44 of pleats 26 to engage and adhere to filtration media 24. Extrudate 144 is subsequently cures to form retention strap 82.

In an alternative embodiment, reinforcement structure 94 is introduced into retention strap 92. One method of introducing reinforcement structure 94 into retention strap 92 is to apply a first layer of extrudate 144 to periphery 25. Reinforcement structure 94 is introduced into extrudate 144 by the optional reinforcement applicator. Application roller 104 depresses textile reinforcement structure 94 into the first layer of extrudate 144. Subsequent layers of extradite 144 are then formed over and around reinforcement structure 94. Another method of introducing reinforcement structure 94 into retention strap 92 to place reinforcement structure 94 between any two separate layers of extrudate 144 using substantially similar methods as described above.

When circumferentially opposite ends of extrudate 144 overlap, cutoff mechanism 106 is activated to sever extrudate 144 moving substantially parallel to axis A as illustrated by the double arrows in Figure 5. Application roller 104 then forms a unified one-piece retention strap 82 (or 90) that substantially remains in its pre-determined axial position and facilitates support of pleats 26 and prevention of engagement between adjacent pleats 26.

The method and apparatus for assembling a filter cartridge as described herein facilitates a life expectancy of the filter cartridge. Specifically, a high-temperature strap formed about an outer periphery as described above facilitates an effective filter cartridge configuration. More specifically, such configuration facilitates maintenance of such straps securely in pre-determined positions for extended periods of time in relatively adverse environments. Moreover, a method of forming such high-temperature straps as described herein facilitates increasing an efficiency and effectiveness of such formation. Furthermore, the filter cartridge with high-temperature straps as described herein facilitates reliability of the filter cartridges as well as the filtration components into which such cartridges are embedded.

Exemplary embodiments of high-temperature straps as associated with filter cartridges are described above in detail. The methods, apparatus and systems are not limited to the specific embodiments described herein nor to the specific illustrated filter cartridges and straps.

While the invention has been described in terms of various specific embodiments, those skilled in the art will recognize that the invention can be practiced with modification within the spirit and scope of the claims.

## Claims

1. A retention device comprising a melt-extrudable polymer material configured to facilitate an extended life expectancy of said retention device when operationally exposed to operating temperatures ranging from 135°C (275°F) to 204°C (400°F).

2. A retention device in accordance with Claim 1, further configured to be coupled to a periphery of a filtration media (24), thereby facilitating at least one of:
resistance to movement of said retention device in a direction substantially parallel to a longitudinal central axis of the filtration media; and
resistance to movement of said retention device in a direction substantially concentric about the periphery (25) of the filtration media.

3. A retention device in accordance with Claim 1 or Claim 2, wherein at least one layer of said melt-extrudable polymer material is applied to the filtration media (24) via extrusion.

4. A retention device in accordance with any one of the preceding Claims, wherein said retention device further includes at least one reinforcement structure (94) embedded within said at least one layer of said melt-extrudable polymer material.

5. A filter cartridge (20,90) comprising at least one retention device, said retention device comprising a melt-extrudable polymer material configured to facilitate an extended life expectancy of said filter cartridge when operationally exposed to operating temperatures ranging from 135°C (275°F) to 204°C (400°F).

6. A filter cartridge (20,90) in accordance with Claim 5, said filter cartridge is configured to remove particulates from a particulate laden fluid stream flowing in one direction through said filter cartridge, said filter cartridge periodically subject to a cleaning fluid stream flowing in an opposite direction to the particulate laden fluid stream, said filter cartridge further comprising:
a filtration media (24), said filtration media comprising a plurality of pleats (26) formed into a substantially tubular configuration with a pre-determined spacing between each of said plurality of pleats;
at least one mounting structure (62) at a first axial end portion (84) of said filtration media; and
at least one end cap (66) at a second axial end portion of said filtration media, wherein said filtration media is retained in the generally tubular configuration by said mounting structure and said end cap.

7. A filter cartridge (20,90) in accordance with claim 6, wherein each of said plurality of pleats (26) comprises a pair of substantially oblique sides (44) forming at least one tip (42), wherein said retention device is coupled to at least one of said tips.

8. A filter cartridge (20,90) in accordance with claim 7, wherein said retention device is coupled to at least one of said substantially oblique sides (44).

9. A filter cartridge (20,90) in accordance with claim 6, wherein said retention device comprises a portion (84) extending between at least two of said adjacent pleats (26).

10. A filter cartridge (20,90) in accordance with any one of Claims 6 to 9, wherein said at least one retention device is further configured to be coupled to a periphery (25) of said filtration media (24), thereby facilitating at least one of:
resistance to movement of said retention device in a direction substantially parallel to a longitudinal central axis of said filtration media;
resistance to movement of said retention device in a direction substantially concentric about the periphery of said filtration media; and
maintaining said pre-determined spacing between each of said plurality of pleats (26).
